# EUROPÄISCHE PATENTSCHRIFT

(11) **EP 2 093 083 B1**
(45) Veröffentlichungstag und Bekanntmachung des Hinweises auf die Patenterteilung: **27.10.2010**
(21) Anmeldenummer: 09162867.7
(22) Anmeldetag: 16.03.2007
(51) Int. Cl.: B60H 1/00

(54) **Klimaanlage**
Air conditioning system
Installation de climatisation

(30) Priorität: 17.03.2006 DE 102006012709; 27.05.2006 DE 102006024796
(43) Veröffentlichungstag der Anmeldung: 26.08.2009
(62) Teilanmeldung aus: 07727024.7
(73) Patentinhaber: Deere & Company, Moline, IL 61265-8098 (US); DEERE & COMPANY, 68163 Mannheim (DE)
(72) Erfinder: Dietrich, Gunnar, 68199, Mannheim (DE); Sonnekalb, Michael, 34613, Schwalmstadt (DE)
(74) Vertreter: Dehnhardt, Florian Christopher

(56) Entgegenhaltungen:
- EP-A- 1 262 347
- EP-A- 1 504 934
- EP-A2- 0 888 912
- WO-A-2004/058525
- DE-A1-102004 008 210

## Beschreibung

Die Erfindung betrifft eine Klimaanlage mit Heizfunktion, umfassend einen Kältemittelkreislauf mit einem Verdichter, einen äußeren Wärmetauscher, ein Expansionsorgan und einen inneren Wärmetauscher, wobei der innere Wärmetauscher in Luftströmungsrichtung in einen ersten und einen zweiten Wärmetauscherstrang geteilt ist.

Eine derartige Klimaanlage für ein Kraftfahrzeug geht beispielsweise aus der EP 888 912 B1 hervor. Diese umfasst einen Luftströmungskanal, in dem die zu klimatisierende Luft mittels eines elektrischen Gebläses an einem Verdampfer, einem Sub-Kühler sowie einem Heizerkern vorbeigeleitet wird. Sowohl der Verdampfer als auch der Sub-Kühler sind in einem gemeinsamen Kühlmittelkreislauf angeordnet. Ein dem Verdampfer sowie dem Sub-Kühler im Kühlmittelkreislauf vorgeschalteter Kompressor dient der Verdichtung des Kühlmittels. Der Kühlmittelkreislauf umfasst ferner einen luftdurchströmten Hauptkühler, der sich mittels eines Vierwege-Ventils zumindest während eines von einer herkömmlichen Kühlbetriebsart abweichenden Heizbetriebsart zeitweise derart umgehen lässt, dass das beim Verdichten mittels des Kompressors erhitzte Kühlmittel unmittelbar dem Sub-Kühler und danach dem Verdampfer zugeführt wird. Auf diese Weise ist eine besonders rasche Aufheizung der zu klimatisierenden Luft bei gleichzeitiger vorheriger Trocknung möglich. EP 1262 347 offenbart eine klimaanlage nach dem Oberbegriff des Auspruchs 1.

Um gestiegenen Komfortanforderungen gerecht zu werden, ist es wünschenswert, eine derartige Klimaanlage mit möglichst geringem konstruktivem Aufwand um zusätzliche Betriebsarten zu erweitern.

Diese Aufgabe wird erfindungsgemäß durch die Merkmale des Patentanspruchs 1 gelöst. Bevorzugte Weiterbildungen der Erfindung gehen aus den Unteransprüchen hervor.

Die Klimaanlage mit Heizfunktion umfasst einen Kältemittelkreislauf mit einem Verdichter, einen äußeren Wärmetauscher, ein Expansionsorgan und einen inneren Wärmetauscher, wobei der innere Wärmetauscher in Luftströmungsrichtung in einen ersten und einen zweiten Wärmetauscherstrang geteilt ist. Erfindungsgemäß ist die Hochdruckseite des Verdichters über ein erstes Ventil mit dem äußeren Wärmetauscher und über ein zweites Ventil mit dem ersten Wärmetauscherstrang des inneren Wärmetauschers verbindbar, wobei dem äußeren Wärmetauscher ein Expansionsorgan nachgeschaltet ist, das über den zweiten Wärmetauscherstrang mit der Niederdruckseite des Verdichters in Verbindung steht, wobei das Expansionsorgan über ein drittes Ventil ferner mit dem ersten Wärmetauscherstrang des inneren Wärmetauschers verbindbar ist, und wobei mittels eines dem ersten Wärmetauscherstrang nachgeschalteten Dreiwegeventils eine Verbindung entweder mit der Niederdruckseite des Verdichters oder aber mit einer zwischen dem äußeren Wärmetauscher und dem Expansionsorgan vorgesehenen Abzweigung herstellbar ist.

Die Klimaanlage ist derart konfiguriert, dass mit möglichst wenig Ventilen insgesamt sechs Betriebsarten realisiert werden können.

So kann mittels der Ventile von der Betriebsart "Kühlen" in die Betriebsart "Heizen" umgeschaltet werden, wobei mittels des Kompressors auch geheizt wird. Durch den in Luftströmungsrichtung geteilten Aufbau des inneren Wärmetauschers kann zusätzlich ein Trocknen der Zuluft für den Innenraum erreicht werden. Dabei durchströmt die Zuluft erst den vorzugsweise als Verdampfer dienenden ersten Teilwärmetauscher, der dabei abgekühlt wird, so dass Luftfeuchtigkeit an den Lamellen der Wärmeaustauschfläche kondensiert. Im vorzugsweise als Gaskühler dienenden zweiten Teilwärmetauscher wird die Zuluft durch Rückheizen wieder erwärmt. Dieser innere Wärmetauscher, der als ein Bauteil des Kältemittelkreislaufs im Zuluftstrom des Fahrzeuginnenraums Verwendung findet, ist dabei kältemittelseitig in einen warmen und in einen kalten Teilwärmetauscher aufteilbar, wobei die luftseitige Wärmeaustauschfläche der beiden Teilwärmetauscher thermisch getrennt ist.

Insbesondere bei verbrauchsoptimierten Verbrennungsmotoren steht eine ausreichende Abwärme im Kühlkreislauf des Motors während der Kaltstartphase nicht zur Verfügung. Der vom Verbrennungsmotor angetriebene Klimaverdichter liefert unmittelbar nach dem Start ausreichend Verdichterabwärme bei hohen Verdichteraustrittstemperaturen. Durch die direkte Wärmeübertragung im als Gaskühler wirkenden inneren Wärmetauscher können vergleichsweise hohe Zuluftausblastemperaturen erreicht werden, sodass unmittelbar nach dem Start die Fahrzeugscheiben von Eis und Beschlag freigeblasen werden können. Hierbei durchläuft das Kältemittel den Verdichter, den inneren Wärmetauscher, der als Gaskühler arbeitet, und gegebenenfalls ein vor dem Gaskühler angeordnetes Expansionsorgan.

Für die maximale Heiz- bzw. Kühlleistung können die beiden Teilstränge des inneren Wärmetauschers parallel geschaltet werden. Beim direkten Umschalten von maximalem Kühlen in maximales Heizen können die Fahrzeugscheiben beschlagen. Der Grund dafür liegt darin, dass die an der zuvor gekühlten Wärmetauscherfläche des Verdampfers auskondensierte Luftfeuchtigkeit in der Arbeitsweise als Gaskühler sofort verdampfen kann und sich auf den kalten Fahrzeugscheiben niederschlägt. Um dies zu vermeiden, kann der in Luftströmungsrichtung erste Teilstrang des inneren Wärmetauschers auch ohne den zweiten Teilstrang in der Betriebsart "normales Kühlen" als Verdampfer betrieben werden. Dies ist vorzugsweise kurz vor Erreichen der Innenraumsolltemperatur der Fall. Ebenso kann der in Luftströmungsrichtung zweite Teilstrang des inneren Wärmetauschers auch ohne den ersten Teilstrang in der Betriebsart "normales Heizen" als Gaskühler betrieben werden. Die Wärmeaustauschflächen beider Teilstränge des inneren Wärmetauschers sind thermisch voneinander durch einen Luftspalt getrennt. Dies verhindert in der Betriebsart "normales Heizen", dass Wärme vom als Gaskühler betriebenen zweiten Teilwärmetauscher auf den zuvor als Verdampfer betriebenen ersten Teilwärmetauscher übertragen wird und eventuell auskondensierte Luftfeuchtigkeit wieder verdampfen kann. Ein ähnlicher Aufbau ist von herkömmlichen Fahrzeugklimaanlagen bekannt, wobei allerdings die Kühlflüssigkeit des Motors als Heizmedium verwendet wird. Zusätzlich kann die Zuluft in den Betriebsarten "Trocknen und Kühlen" bzw. "Trocknen und Heizen" durch das oben beschriebene Rückheizen getrocknet werden, was dem Beschlagen der Fahrzeugscheiben entgegenwirkt.

Typischerweise wird die Klimaanlage zur schnellen Abkühlung des im Sommer stark aufgeheizten Fahrzeuginnenraums zunächst in der Betriebsart "maximales Kühlen" betrieben, in dem beide Teilstränge des inneren Wärmetauschers als Verdampfer arbeiten. Kurz vor Erreichen der Solltemperatur wird in die Betriebsart "normales Kühlen" geschaltet, in der nur der erste Teilstrang (ohne den zweiten Teilstrang) des inneren Wärmetauschers als Verdampfer arbeitet. Bei Erreichen der Solltemperatur wird die Temperatur beispielsweise durch gezieltes Gegenheizen mit dem zweiten Teilstrang des inneren Wärmetauschers als Gaskühler ausgeregelt. Der zweite Teilstrang erwärmt sich dabei. Dadurch wird die Zuluft getrocknet. Eventuell vorhandene Restfeuchte dieses in der Betriebsart "maximales Kühlen" als Verdampfer betriebenen Teilwärmetauschers kann zwar verdampfen, wird sich aber nicht an den Fahrzeugscheiben niederschlagen können, da diese im Sommer durch die Außenluft und eventuell durch Sonneneinstrahlung wärmer sind als die gekühlte Zuluft.

Im Gegensatz zum Rückheizen mit Motorkühlwasser ist der erfindungsgemäße Klimaanlagenbetrieb in der Betriebsart "Trocknen und Kühlen" effizienter. Das Temperaturniveau im zusätzlich als Gaskühler bzw. Kondensator betriebenen zweiten Teilstrang des inneren Wärmetauschers ist deutlich geringer als das Temperaturniveau im äußeren Wärmetauscher. Der Hochdruck der Klimaanlage kann dadurch abgesenkt werden. Die geringere Druckdifferenz und das geringere Druckverhältnis wirken sich vorteilhaft auf die Verdichtereffizienz aus. Erfindungsgemäß wird weniger Verdichtungsarbeit benötigt, weil die Enthalpiedifferenz zwischen Verdichteraustritt und -eintritt abnimmt. Dies wirkt sich auch vorteilhaft in einer geringeren mechanischen und thermischen Belastung des Verdichters aus. Durch die erfindungsgemäße Absenkung der Kältemitteleintrittstemperatur in das Expansionsorgan wird die Enthalpiedifferenz zwischen Verdampferaustritt und Verdampfereintritt vorteilhaft gesteigert. Die Klimaanlageneffizienz als Verhältnis der Verdampferleistung bzw. Verdampferenthalpiedifferenz zur Verdichterarbeit bzw. Verdichterenthalpiedifferenz nimmt zu.

Typischerweise wird die Klimaanlage mit Heizfunktion zur schnellen Aufheizung des in kalten Wintern erheblich ausgekühlten Fahrzeuginnenraums zunächst in der Betriebsart "maximales Heizen" betrieben, in der beide Teilstränge des inneren Wärmetauschers als Gaskühler arbeiten. Bei plötzlichem Beschlagen der Fahrzeugscheiben wird die Klimaanlage in die Betriebsart "normales Heizen" geschaltet, in der nur der zweite Teilstrang (ohne den ersten Teilstrang) des inneren Wärmetauschers als Gaskühler arbeitet.

Die Betriebsarten "maximales Heizen" und "normales Heizen" sind sogenannte Heißgas- oder Dreiecksprozesse, wie oben beschrieben. Auch die dritte Betriebsart "Trocknen und Heizen" ist kein Wärmepumpenprozess, obwohl das Kältemittel im zweiten Teilstrang des inneren Wärmetauschers gekühlt und im ersten Teilstrang verdampft wird. Die Zuluft zum Fahrzeuginnenraum dient sowohl als Wärmequelle (im ersten Teilwärmetauscher) als auch als Wärmesenke (im zweiten Teilwärmetauscher). Wie in den beiden anderen Betriebsarten stellt die Verdichterabwärme einen großen Teil der eingebrachten Wärmemenge. Gegenüber dem reinen Heißgaszyklus hat die erfindungsgemäße Betriebsart "Trocknen und Heizen" den Vorteil, die latente Wärme der kondensierbaren Zuluftfeuchtigkeit zusätzlich zur Verdichterabwärme zu nutzen. Ein weiterer Vorteil dieser Betriebsart ist ein schnelleres Befreien der Fahrzeugscheiben von Eis und Beschlag durch die getrocknete und aufgeheizte Zuluft. Bei eventuell auftretender Vereisung des als Verdampfer arbeitenden ersten Teilstrangs des inneren Wärmetauschers, was mittels eines Vereisungsschutzes, beispielsweise eines Temperatursensors detektiert wird, wird vorzugsweise in die Betriebsart "normales Heizen" umgeschaltet. Dies ist ein Heißgaszyklus, bei dem der erste Teilstrang des inneren Wärmetauschers nicht vom Kältemittel durchströmt wird. Wenn der erste Teilstrang durch die Zuluft, die einen Anteil erwärmter Rückluft aus dem Fahrzeuginnenraum enthält, abgetaut ist, kann erneut in die Betriebsart "Trocknen und Heizen" geschaltet werden.

Erreicht die Motorkühlwassertemperatur einen bestimmten Sollwert, vorzugsweise einen Wert größer als die Zuluftausblastemperatur, oder wird der Sollwert der Luftinnenraumtemperatur erreicht, übernimmt das erwärmte Motorkühlwasser im Heizungswärmetauscher, der vorzugsweise in Luftströmungsrichtung dem inneren Wärmetauscher des Kältemittelkreislaufs nachgeordnet ist, die Beheizung der Zuluft. Der Verdichter der Klimaanlage wird abgeschaltet, oder es wird zum Rückheizen die Klimaanlage in die Betriebsart "normales Kühlen" geschaltet. Die Wärmeabgabe erfolgt dabei über den äußeren Wärmetauscher an die Außenluft, die in diesem Fall typischerweise kälter als die Zuluft ist. Ein Beheizen des Fahrzeugs mit Motorkühlwasserabwärme ist energetisch vorteilhafter, als den Kältemittelverdichter zur Beheizung dauerhaft durch den Motor anzutreiben. Andererseits steht während der Kaltstartphase des Motors diese Abwärme nicht ausreichend zur Verfügung, und es ist energetisch sinnvoller, den Kältemittelverdichter anzutreiben, als die Lichtmaschine als Generator anzutreiben und beispielsweise mittels eines PTC elektrisch zu heizen, da der Wirkungsgrad bei der Wandlung mechanischer Antriebsenergie in elektrische Energie im Allgemeinen schlechter ist.

Weitere Einzelheiten, Merkmale und Vorteile ergeben sich aus der nachfolgenden Beschreibung der anliegenden Zeichnungen. Es zeigen:
- Fig. 1: ein schematisch dargestelltes Ausführungsbeispiel der erfindungsgemäßen Klimaanlage,
- Fig. 2: das gemäß Fig. 1 dargestellte Ausführungsbeispiel der erfindungsgemäßen Klimaanlage in einer Betriebsart "maximales Kühlen",
- Fig. 3: das gemäß Fig. 1 dargestellte Ausführungsbeispiel der erfindungsgemäßen Klimaanlage in einer Betriebsart "normales Kühlen",
- Fig. 4: das gemäß Fig. 1 dargestellte Ausführungsbeispiel der erfindungsgemäßen Klimaanlage in einer Betriebsart "Trocknen und Kühlen",
- Fig. 5: das gemäß Fig. 1 dargestellte Ausführungsbeispiel der erfindungsgemäßen Klimaanlage in einer Betriebsart "Trocknen und Heizen",
- Fig. 6: das gemäß Fig. 1 dargestellte Ausführungsbeispiel der erfindungsgemäßen Klimaanlage in einer Betriebsart "normales Heizen",
- Fig. 7: das gemäß Fig. 1 dargestellte Ausführungsbeispiel der erfindungsgemäßen Klimaanlage in einer Betriebsart "maximales Heizen", und
- Fig. 8: das gemäß Fig. 1 dargestellte Ausführungsbeispiel der erfindungsgemäßen Klimaanlage mit einem zusätzlichen Verdichterbypass.

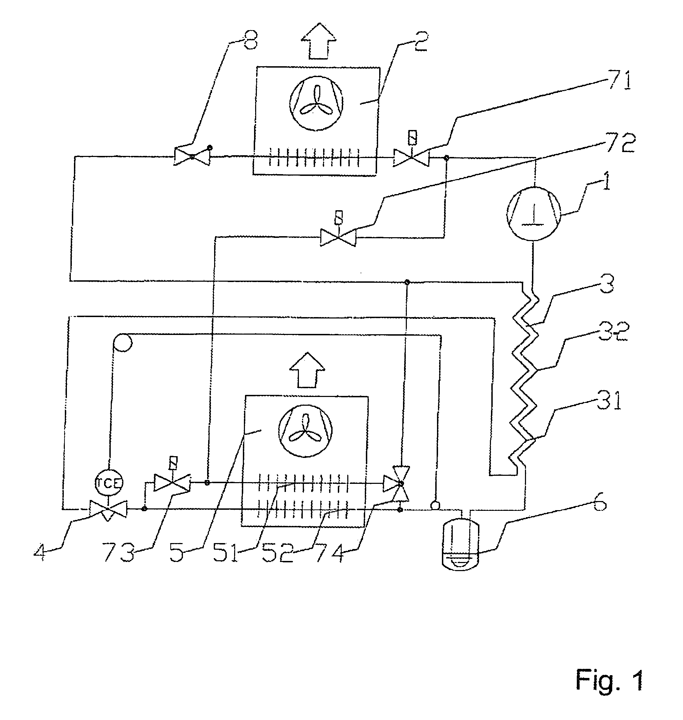

Fig. 1 zeigt eine Klimaanlage mit Heizfunktion, die mittels Umschaltventilen 71, 72, 73 und 74 sechs unterschiedliche Betriebsarten vorsieht. Ein innerer Wärmetauscher 5 für den Fahrzeuginnenraum ist in Luftströmungsrichtung geteilt. Die Luft durchströmt zunächst einen vorzugsweise zum Kühlen eingesetzten Teilwärmetauscher 52 und danach einen vorzugsweise zum Heizen eingesetzten Teilwärmetauscher 51. Hinter diesem inneren Wärmetauscher 5 kann in Luftströmungsrichtung zusätzlich ein Heizungswärmetauscher angeordnet sein, der die Luft mittels warmen Motorkühlwassers erwärmt. Die Wärmetauscher 2 und 5 und die Umschaltventile 71 bis 74 sind derart angeordnet, dass mit möglichst geringem konstruktivem Aufwand die sechs Betriebsarten realisiert werden können. Die Teilwärmetauscher 51 und 52 sind in den Betriebsarten "maximales Kühlen" und "maximales Heizen" jeweils parallel geschaltet. In den Betriebsarten "normales Kühlen" und "normales Heizen" wird nur jeweils ein Teilwärmetauscher von Kältemittel durchströmt. In der Betriebsart "Trocknen" wird der Teilwärmetauscher 51 mit Hochdruck und der Teilwärmetauscher 52 mit Niederdruck vom Kältemittel durchströmt. Ein Rückschlagventil 8, ein interner Wärmetauscher 3 und ein Sammler 6 sind optionale Bauteile.

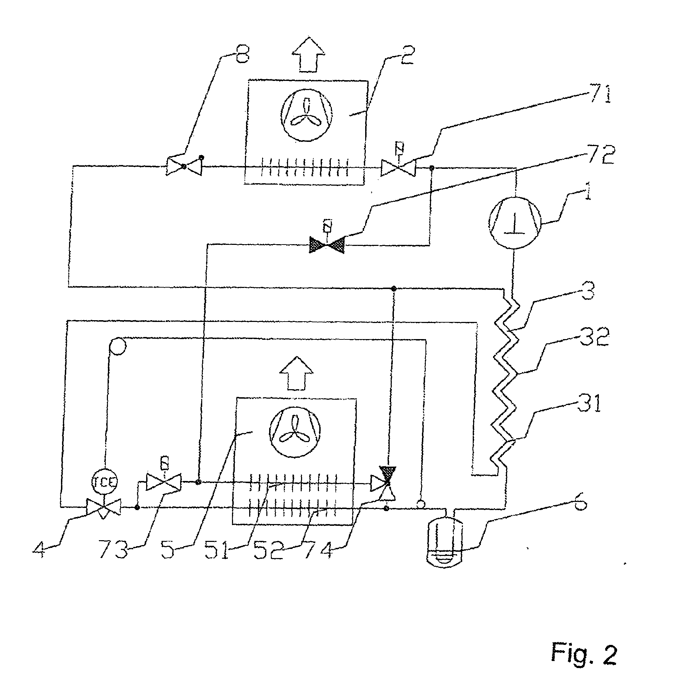

Fig. 2 zeigt die in Fig. 1 dargestellte Klimaanlage in der Betriebsart "maximales Kühlen". Das Kältemittel wird vom Verdichter 1 komprimiert und strömt über das Ventil 71, den äußeren Wärmetauscher 2, das optionale Rückschlagventil 8 und den Hochdruckteil 31 des internen Wärmetauschers 3 zum Expansionsorgan 4. Im Expansionsorgan 4 wird das Kältemittel im Druck reduziert und strömt über den inneren Wärmetauscher 5, den Sammler 6 und den Niederdruckteil 32 des internen Wärmetauschers 3 zum Verdichter 1 zurück. Das Kältemittel verdampft dabei im inneren Wärmetauscher 5, wobei ein Teil durch den Teilstrang 52 und ein anderer Teil parallel dazu durch das Ventil 73, den Teilstrang 51 und das Dreiwegeventil 74 strömt. Das Ventil 72 bleibt in dieser Betriebsart geschlossen.

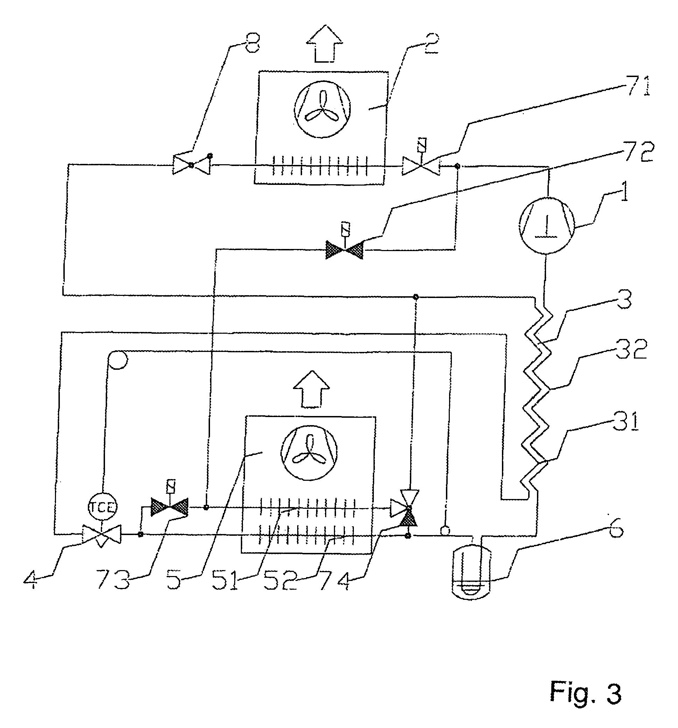

Fig. 3 zeigt die in Fig. 1 dargestellte Klimaanlage in der Betriebsart "normales Kühlen". Das Kältemittel wird vom Verdichter 1 komprimiert und strömt über das Ventil 71, den äußeren Wärmetauscher 2, das optionale Rückschlagventil 8 und den Hochdruckteil 31 des internen Wärmetauschers 3 zum Expansionsorgan 4. Im Expansionsorgan 4 wird das Kältemittel im Druck reduziert und strömt über den inneren Wärmetauscher 5, den Sammler 6 und den Niederdruckteil 32 des internen Wärmetauschers 3 zum Verdichter 1 zurück. Das Kältemittel verdampft dabei im inneren Wärmetauscher 5, wobei das gesamte Kältemittel nur durch den Teilstrang 52 strömt. Die Ventile 72 und 73 bleiben in dieser Betriebsart geschlossen und das Dreiwegeventil 74 sperrt den Teilstrang 51 des inneren Wärmetauschers 5 vom Teilstrang 52 ab.

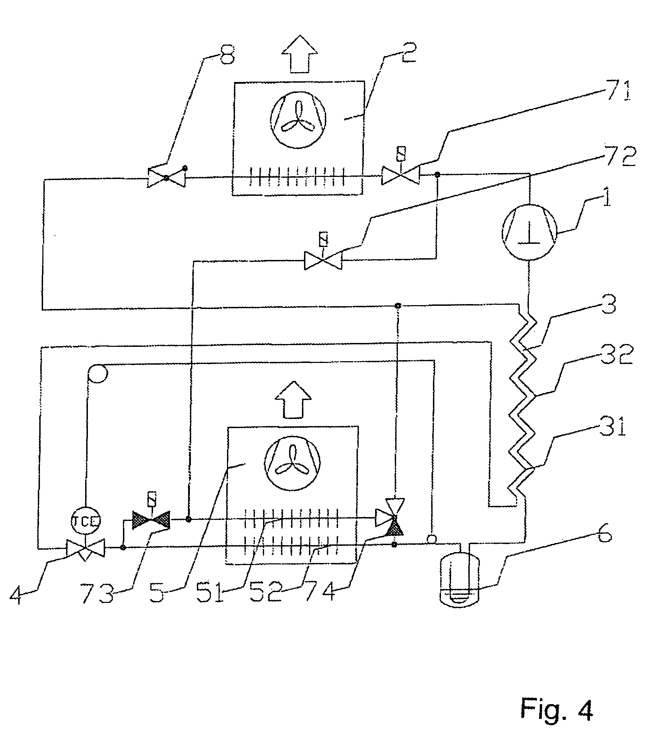

Fig. 4 zeigt die in Fig. 1 dargestellte Klimaanlage in der Betriebsart "Trocknen und Kühlen". Das Kältemittel wird vom Verdichter 1 komprimiert. Ein Teil des Kältemittels strömt über das Ventil 71, den äußeren Wärmetauscher 2 und das optionale Rückschlagventil 8, ein anderer Teil strömt parallel dazu über das Ventil 72, den Teilstrang 51 des inneren Wärmetauschers 5 und das Dreiwegeventil 74 zum Hochdruckteil 31 des internen Wärmetauschers 3 und weiter zum Expansionsorgan 4. Im Expansionsorgan 4 wird das Kältemittel im Druck reduziert und strömt über den Teilstrang 52 des inneren Wärmetauschers 5, den Sammler 6 und den Niederdruckteil 32 des internen Wärmetauschers 3 zum Verdichter 1 zurück. Das Kältemittel verdampft dabei im Teilstrang 52 des inneren Wärmetauschers 5. Das Ventil 73 und das Dreiwegeventil 74 sperren den Teilstrang 51 des inneren Wärmetauschers 5 vom Teilstrang 52 ab. Die Luft, die den inneren Wärmetauscher 5 durchströmt, wird zunächst durch den Teilwärmetauscher 52 abgekühlt und dabei entfeuchtet und anschließend im Teilwärmetauscher 51 durch Rückheizen wieder erwärmt. Die Luftaustrittstemperatur des inneren Wärmetauschers 5 kann über gezieltes Öffnen und Schließen des Ventils 72 geregelt werden.

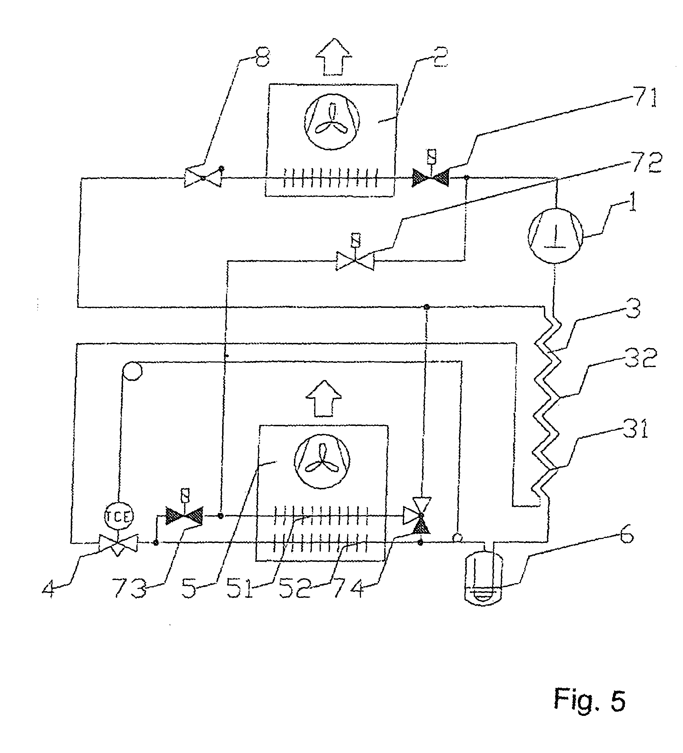

Fig. 5 zeigt die in Fig. 1 dargestellte Klimaanlage in der Betriebsart "Trocknen und Heizen". Das Kältemittel wird vom Verdichter 1 komprimiert und strömt über das Ventil 72, den Teilstrang 51 des inneren Wärmetauschers 5 und das Dreiwegeventil 74 und den Hochdruckteil 31 des internen Wärmetauschers 3 zum Expansionsorgan 4. Im Expansionsorgan 4 wird das Kältemittel im Druck reduziert und strömt über den Teilstrang 52 des inneren Wärmetauschers 5, den Sammler 6 und den Niederdruckteil 32 des internen Wärmetauschers 3 zum Verdichter 1 zurück. Das Kältemittel verdampft dabei im Teilstrang 52 des inneren Wärmetauschers 5. Das Ventil 73 und das Dreiwegeventil 74 sperren den Teilstrang 51 des inneren Wärmetauschers 5 vom Teilstrang 52 ab. Die Luft, die den inneren Wärmetauscher 5 durchströmt, wird zunächst durch den Teilwärmetauscher 52 abgekühlt und dabei entfeuchtet und anschließend im Teilwärmetauscher 51 durch Rückheizen wieder erwärmt. Die Luftaustrittstemperatur des inneren Wärmetauschers 5 kann über gezieltes Öffnen und Schließen des Ventils 71 geregelt werden, wobei ein Teil des Kältemittels parallel zum Teilstrang 51 des inneren Wärmetauschers 5 über das Ventil 71, den äußeren Wärmetauscher 2 und das optionale Rückschlagventil 8 zum Hochdruckteil 31 des internen Wärmetauschers 3 strömt.

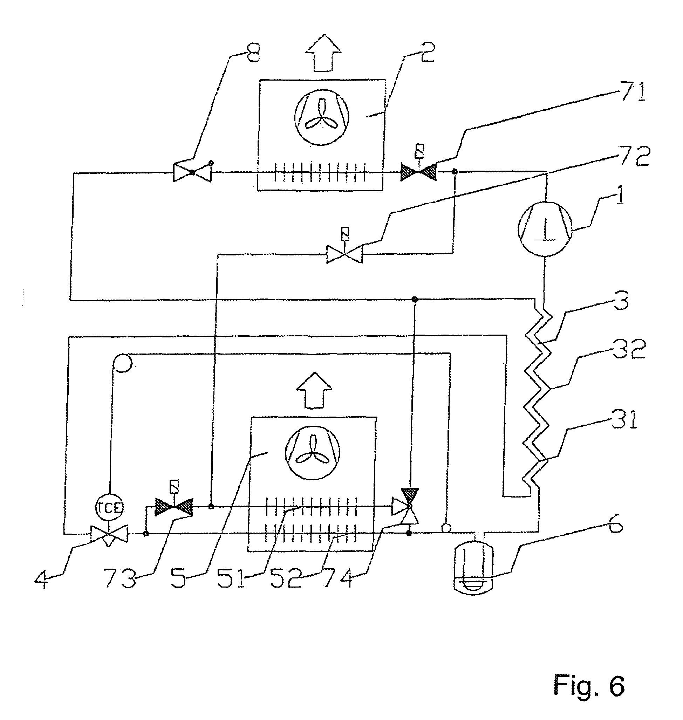

Fig. 6 zeigt die in Fig. 1 dargestellte Klimaanlage in der Betriebsart "normales Heizen". Das Kältemittel wird vom Verdichter 1 komprimiert und strömt über das Ventil 72, den Teilstrang 51 des inneren Wärmetauschers 5, das Dreiwegeventil 74, den Sammler 6 und den Niederdruckteil 32 des internen Wärmetauschers 3 zum Verdichter 1 zurück. Die Ventile 71 und 73 bleiben in dieser Betriebsart geschlossen. Der äußere Wärmetauscher 2, der Hochdruckteil 31 des internen Wärmetauschers 3 und der Teilstrang 52 des inneren Wärmetauschers 5 werden nicht durchströmt. Eine Expansion des Kältemittels kann beispielsweise durch gepulstes Öffnen und Schließen des Ventils 72 erfolgen.

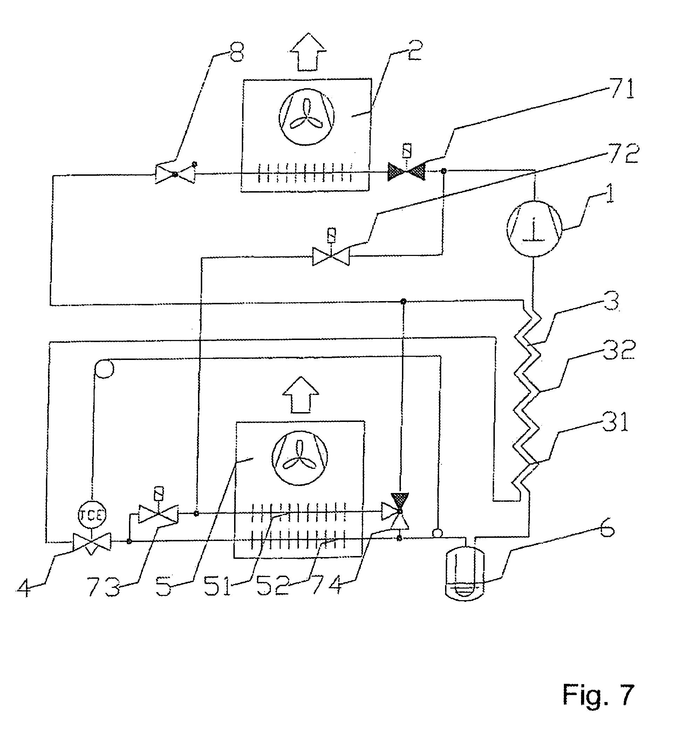

Fig. 7 zeigt die Betriebsart "maximales Heizen". Das Kältemittel wird vom Verdichter 1 komprimiert und strömt über das Ventil 72, den inneren Wärmetauscher 5, den Sammler 6 und den Niederdruckteil 32 des internen Wärmetauschers 3 zum Verdichter 1 zurück. Ein Teil des Kältemittels strömt über den Teilstrang 51 des inneren Wärmetauschers 5 und das Dreiwegeventil 74 zum Sammler 6, ein anderer Teil parallel dazu über das Ventil 73 und den Teilstrang 52 des inneren Wärmetauschers 5. Das Ventil 71 bleibt in dieser Betriebsart geschlossen und sperrt den äußeren Wärmetauscher 2 und den Hochdruckteil 31 des internen Wärmetauschers 3 ab. Eine Expansion des Kältemittels kann beispielsweise durch gepulstes Öffnen und Schließen des Ventils 72 erfolgen.

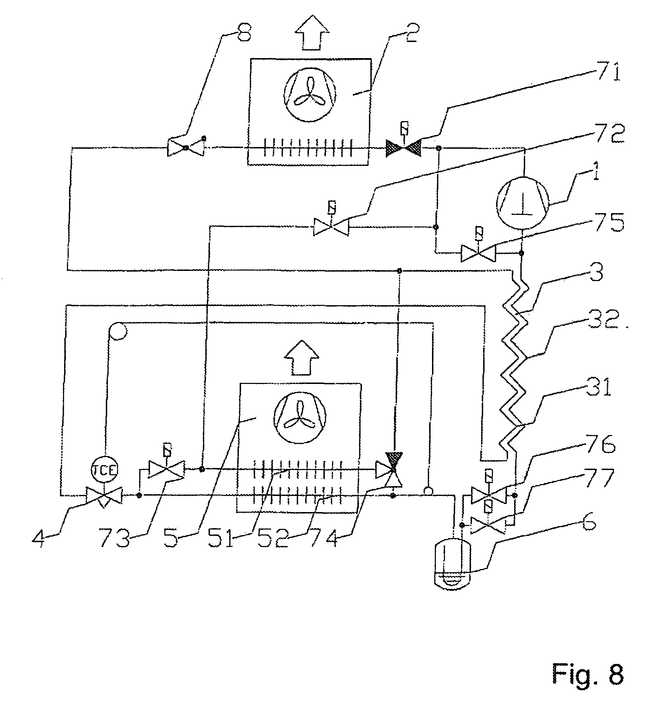

Fig. 8 zeigt zusätzlich einen Bypass zwischen der Hochdruckseite und der Niederdruckseite des Verdichters 1 unter Umgehung des äußeren Wärmetauschers 2 und des inneren Wärmetauschers 5. Der Bypass ist über ein Ventil 75 absperrbar. Die Öffnung des Ventils 75 kann zur Regelung einer bestimmten Sauggasüberhitzung am Verdichtereintritt während des Heißgaszyklus ("maximales Heizen" bzw. "normales Heizen") oder auch zur Regelung eines bestimmten Temperatur- oder Druckniveaus am Verdichter eingesetzt werden. Das Ventil 75 soll eine Kühlung des Verdichters durch flüssiges Kältemittel am Verdichtereintritt verhindern.

Ferner sind parallele Ventile 76 und 77 in der Saugleitung angeordnet, hier vorzugsweise am Eintritt in den Niederdruckteil 32 des internen Wärmetauschers 3. Diese können auch unmittelbar vor dem Verdichter 1 angeordnet sein oder eines der Ventile 76, 77 in einem Bypass parallel zum Niederdruckteil 32 des internen Wärmetauschers 3. In geöffnetem Zustand führen die Ventile 76, 77 zu keinem wesentlichen Druckverlust in den Betriebsarten "maximales Kühlen", "normales Kühlen", "Trocknen und Kühlen" und "Trocknen und Heizen". In den Betriebsarten "normales Heizen" bzw. "maximales Heizen" werden diese als Expansionsorgan angesteuert.

Dabei können die Ventile 76, 77 gleiche oder unterschiedliche Drosselkennlinien haben. Zur Regelung der Sauggasüberhitzung am Eintritt des Verdichters 1 oder der Verdichteraustrittstemperatur bzw. des Hochdruckes können beide Ventile 76, 77 geöffnet oder jeweils eines geschlossen sein je nach Verdichterdrehzahl bzw. Massenstrom. Der Massenstrom eines ungeregelten Verdichters kann auf diese Weise in allen Betriebsarten geregelt werden.

Eines der Ventile, beispielsweise das Ventil 77, kann auch durch eine Fixdrossel ersetzt werden, wobei die Regelung über das Öffnen und Schließen des anderen Ventils 76 erfolgt. Sofern das Ventil 76 keinen nennenswerten Druckverlust in vollständig geöffnetem Zustand aufweist, kann das Ventil 77 ein thermostatisches Expansionsventil sein, das die Sauggasüberhitzung am Verdichtereintritt in den Betriebsarten "maximales Heizen" und "normales Heizen" ausregelt. In diesen Betriebsarten ist das Ventil 76 geschlossen, in allen anderen Betriebsarten geöffnet. Sofern das Ventil 76 zusätzlich ansteuerbar ist, um die Sauggasüberhitzung, die Verdichteraustrittstemperatur, den Hochdruck oder den Massenstrom zu regeln, kann das Ventil 77 und der dazugehörende Teilstrang auch entfallen.

## Patentansprüche

1. Klimaanlage mit Heizfunktion, umfassend einen Kältemittelkreislauf mit einem Verdichter (1), einen äußeren Wärmetauscher (2), ein Expansionsorgan (4) und einen inneren Wärmetauscher (5), wobei der innere Wärmetauscher (5) in Luftströmungsrichtung in einen ersten und einen zweiten Wärmetauscherstrang (51, 52) geteilt ist,
die Hochdruckseite des Verdichters (1) ist über ein erstes Ventil (71) mit dem äußeren Wärmetauscher (2) und über ein zweites Ventil (72) mit dem ersten Wärmetauscherstrang (51) des inneren Wärmetauschers (5) verbindbar , wobei dem äußeren Wärmetauscher (2) ein Expansionsorgan (4) nachgeschaltet ist, das über den zweiten Wärmetauscherstrang (52) mit der Niederdruckseite des Verdichters (1) in Verbindung steht, **dadurch gekennzeichnet, dass** das Expansionsorgan (4) über ein drittes Ventil (73) ferner mit dem ersten Wärmetauscherstrang (51) des inneren Wärmetauschers (5) verbindbar ist, und wobei mittels eines dem ersten Wärmetauscherstrang (51) nachgeschalteten Dreiwegeventils (74) eine Verbindung entweder mit der Niederdruckseite des Verdichters (1) oder aber mit einer zwischen dem äußeren Wärmetauscher (2) und dem Expansionsorgan (4) vorgesehenen Abzweigung herstellbar ist.

2. Klimaanlage nach Anspruch 1, **dadurch gekennzeichnet, dass** dem inneren Wärmetauscher (5) in Luftströmungsrichtung ein zusätzlicher Heizungswärmetauscher nachgeschaltet ist.

3. Klimaanlage nach Anspruch 1 oder 2, **dadurch gekennzeichnet, dass** ein interner Wärmetauscher (3) mit einem Hochdruckteil (31) und einem Niederdruckteil (32) vorgesehen ist, wobei der Hochdruckteil (31) zwischen dem äußeren Wärmetauscher (2) und dem Expansionsorgan (4) und der Niederdruckteil (32) zwischen dem zweiten Wärmetauscherstrang (52) des inneren Wärmetauschers (5) und der Niederdruckseite des Verdichters (1) vorgesehen ist.

4. Klimaanlage nach Anspruch 3, **dadurch gekennzeichnet, dass** zwischen dem äußeren Wärmetauscher (2) und dem Hochdruckteil (31) des internen Wärmetauschers (3) ein Rückschlagventil (8) vorgesehen ist.

5. Klimaanlage nach Anspruch 3 oder 4, **dadurch gekennzeichnet, dass** zwischen dem zweiten Wärmetauscherstrang (52) des inneren Wärmetauschers (5) und dem Niederdruckteil (32) ein Sammler (6) vorgesehen ist.

6. Klimaanlage nach einem der Ansprüche 1 bis 5, **dadurch gekennzeichnet, dass** ein durch ein fünftes Ventil (75) gebildeter Bypass zwischen der Hochdruckseite und der Niederdruckseite des Verdichters (1) vorgesehen ist.

7. Klimaanlage nach einem der Ansprüche 1 bis 6, **dadurch gekennzeichnet, dass** zwischen dem inneren Wärmetauscher (5) und der Niederdruckseite des Verdichters (1) ein Paar parallel geschalteter Ventile (76, 77) vorgesehen sind.

8. Klimaanlage nach Anspruch 7, **dadurch gekennzeichnet, dass** die Ventile (76, 77) gleiche oder unterschiedliche Drosselkennlinien aufweisen.

9. Klimaanlage nach Anspruch 7 oder 8, **dadurch gekennzeichnet, dass** es sich bei einem der Ventile (76, 77) um eine Fixdrossel handelt.

10. Klimaanlage nach einem der Ansprüche 1 bis 9, **dadurch gekennzeichnet, dass** in einer auf maximales Kühlen gerichteten Betriebsart das erste und dritte Ventil (71, 73) geöffnet sowie das zweite Ventil (72) geschlossen ist, und dass mittels des Dreiwegeventils (74) eine Verbindung des ersten Wärmetauscherstrangs (51) mit der Niederdruckseite des Verdichters (1) hergestellt ist.

11. Klimaanlage nach einem der Ansprüche 1 bis 9, **dadurch gekennzeichnet, dass** in einer auf normales Kühlen gerichteten Betriebsart das erste Ventil (71) geöffnet sowie das zweite und dritte Ventil (72, 73) geschlossen ist, und dass mittels des Dreiwegeventils (74) eine Verbindung des ersten Wärmetauscherstrangs (51) mit der zwischen dem äußeren Wärmetauscher (2) und dem Expansionsorgan (4) vorgesehenen Abzweigung hergestellt ist.

12. Klimaanlage nach einem der Ansprüche 1 bis 9, **dadurch gekennzeichnet, dass** in einer auf Trocknen und Kühlen gerichteten Betriebsart das erste und zweite Ventil (71, 72) geöffnet sowie das dritte Ventil (72, 73) geschlossen ist, und dass mittels des Dreiwegeventils (74) eine Verbindung des ersten Wärmetauscherstrangs (51) mit der zwischen dem äußeren Wärmetauscher (2) und dem Expansionsorgan (4) vorgesehenen Abzweigung hergestellt ist.

13. Klimaanlage nach einem der Ansprüche 1 bis 9, **dadurch gekennzeichnet, dass** in einer auf Trocknen und Heizen gerichteten Betriebsart das erste und dritte Ventil (71, 73) geschlossen sowie das zweite Ventil (72) geöffnet ist, und dass mittels des Dreiwegeventils (74) eine Verbindung des ersten Wärmetauscherstrangs (51) mit der zwischen dem äußeren Wärmetauscher (2) und dem Expansionsorgan (4) vorgesehenen Abzweigung hergestellt ist.

14. Klimaanlage nach einem der Ansprüche 1 bis 9, **dadurch gekennzeichnet, dass** in einer auf normales Heizen gerichteten Betriebsart das erste und dritte Ventil (71, 73) geschlossen sowie das zweite Ventil (72) geöffnet ist, und dass mittels des Dreiwegeventils (74) eine Verbindung des ersten Wärmetauscherstrangs (51) mit der Niederdruckseite des Verdichters (1) hergestellt ist.

15. Klimaanlage nach einem der Ansprüche 1 bis 9, **dadurch gekennzeichnet, dass** in einer auf maximales Heizen gerichteten Betriebsart das erste Ventil (71) geschlossen sowie das zweite und dritte Ventil (72, 73) geöffnet ist, und dass mittels des Dreiwegeventils (74) eine Verbindung des ersten Wärmetauscherstrangs (51) mit der Niederdruckseite des Verdichters (1) hergestellt ist.

## Claims

1. Air-conditioning system having a heating function, comprising a refrigerant circuit with a compressor (1), an external heat exchanger (2), an expansion member (4) and an internal heat exchanger (5), the internal heat exchanger (5) being divided in the airflow direction into a first and a second heat exchanger string (51, 52), the high-pressure side of the compressor (1) being connectable via a first valve (71) to the external heat exchanger (2) and via a second valve (72) to the first heat exchanger string (51) of the internal heat exchanger (5), the external heat exchanger (2) being followed by an expansion member (4) which is connected to the low-pressure side of the compressor (1) via the second heat exchanger string (52), **characterized in that** the expansion member (4) is connectable, furthermore, to the first heat exchanger string (51) of the internal heat exchanger (5) via a third valve (73), while a connection either to the low-pressure side of the compressor (1) or else to a branch-off provided between the external heat exchanger (2) and the expansion member (4) can be made by means of a three-way valve (74) following the first heat exchanger string (51).

2. Air-conditioning system according to Claim 1, **characterized in that** the internal heat exchanger (5) is followed in the airflow direction by an additional heating heat exchanger.

3. Air-conditioning system according to Claim 1 or 2, **characterized in that** an internal heat exchanger (3) with a high-pressure part (31) and with a low-pressure part (32) is provided, the high-pressure part (31) being provided between the external heat exchanger (2) and the expansion member (4), and the low-pressure part (32) being provided between the second heat exchanger string (52) of the internal heat exchanger (5) and the low-pressure side of the compressor (1).

4. Air-conditioning system according to Claim 3, **characterized in that** a non-return valve (8) is provided between the external heat exchanger (2) and the high-pressure part (31) of the internal heat exchanger (3).

5. Air-conditioning system according to Claim 3 or 4, **characterized in that** a collector (6) is provided between the second heat exchanger string (52) of the internal heat exchanger (5) and the low-pressure part (32).

6. Air-conditioning system according to one of Claims 1 to 5, **characterized in that** a bypass formed by a fifth valve (75) is provided between the high-pressure side and the low-pressure side of the compressor (1).

7. Air-conditioning system according to one of Claims 1 to 6, **characterized in that** a pair of parallel-connected valves (76, 77) is provided between the internal heat exchanger (5) and the low-pressure side of the compressor (1).

8. Air-conditioning system according to Claim 7, **characterized in that** the valves (76, 77) have identical or different throttle characteristic curves.

9. Air-conditioning system according to Claim 7 or 8, **characterized in that** one of the valves (76, 77) is a fixed throttle.

10. Air-conditioning system according to one of Claims 1 to 9, **characterized in that**, in an operating mode aimed at maximum cooling, the first and the third valves (71, 73) are open and the second valve (72) is closed, and **in that** a connection of the first heat exchanger string (51) to the low-pressure side of the compressor (1) is made by means of the three-way valve (74).

11. Air-conditioning system according to one of Claims 1 to 9, **characterized in that**, in an operating mode aimed at normal cooling, the first valve (71) is open and the second and the third valves (72, 73) are closed, and **in that** a connection of the first heat exchanger string (51) to the branch-off provided between the external heat exchanger (2) and the expansion member (4) is made by means of the three-way valve (74).

12. Air-conditioning system according to one of Claims 1 to 9, **characterized in that**, in an operating mode aimed at drying and cooling, the first and the second valves (71, 72) are open and the third valve (72, 73) is closed, and **in that** a connection of the first heat exchanger string (51) to the branch-off provided which in the external heat exchanger (2) and the expansion member (4) is made by means of the three-way valve (74).

13. Air-conditioning system according to one of Claims 1 to 9, **characterized in that**, in an operating mode aimed at drying and heating, the first and the third valves (71, 73) are closed and the second valve (72) is open, and **in that** a connection of the first heat exchanger string (51) to the branch-off provided between the external heat exchanger (2) and the expansion member (4) is made by means of the three-way valve (74).

14. Air-conditioning system according to one of Claims 1 to 9, **characterized in that**, in an operating mode aimed at normal heating, the first and the third valves (71, 73) are closed and the second valve (72) is open, and **in that** a connection of the first heat exchanger string (51) to the low-pressure side of the compressor (1) is made by means of the three-way valve (74).

15. Air-conditioning system according to one of Claims 1 to 9, **characterized in that**, in an operating mode aimed at maximum heating, the first valve (71) is closed and the second and the third valves (72, 73) are open, and **in that** a connection of the first heat exchanger string (51) to the low-pressure side of the compressor (1) is made by means of the three-way valve (74).

## Revendications

1. Installation de climatisation avec fonction de chauffage, comprenant un circuit de fluide frigorigène avec un compresseur (1), un échangeur de chaleur extérieur (2), un organe d'expansion (4) et un échangeur de chaleur intérieur (5), l'échangeur de chaleur intérieur (5) étant divisé dans la direction d'écoulement d'air en une première et une deuxième branche d'échange de chaleur (51, 52), le côté haute pression du compresseur (1) pouvant être connecté par le biais d'une première soupape (71) à l'échangeur de chaleur extérieur (2) et par le biais d'une deuxième soupape (72) à la première branche d'échange de chaleur (51) de l'échangeur de chaleur intérieur (5), un organe d'expansion (4) étant monté en aval de l'échangeur de chaleur extérieur (2), lequel est en liaison par le biais de la deuxième branche d'échange de chaleur (52) avec le côté basse pression du compresseur (1), **caractérisée en ce que** l'organe d'expansion (4) peut être connecté en outre par le biais d'une troisième soupape (73) à la première branche d'échange de chaleur (51) de l'échangeur de chaleur intérieur (5), et au moyen d'une soupape à trois voies (74) montée en aval de la première branche d'échange de chaleur (51), une connexion pouvant être établie soit avec le côté basse pression du compresseur (1) soit avec une dérivation prévue entre l'échangeur de chaleur extérieur (2) et l'organe d'expansion (4).

2. Installation de climatisation selon la revendication 1, **caractérisée en ce qu'**un échangeur de chaleur de chauffage supplémentaire est monté en aval de l'échangeur de chaleur intérieur (5) dans la direction d'écoulement de l'air.

3. Installation de climatisation selon la revendication 1 ou 2, **caractérisée en ce qu'**un échangeur de chaleur interne (3) avec une partie haute pression (31) et une partie basse pression (32) est prévu, la partie haute pression (31) étant prévue entre l'échangeur de chaleur extérieur (2) et l'organe d'expansion (4) et la partie basse pression (32) étant prévue entre la deuxième branche d'échange de chaleur (52) de l'échangeur de chaleur intérieur (5) et le côté basse pression du compresseur (1).

4. Installation de climatisation selon la revendication 3, **caractérisée en ce que** l'on prévoit entre l'échangeur de chaleur extérieur (2) et le côté haute pression (31) de l'échangeur de chaleur intérieur (3) une soupape de non retour (8).

5. Installation de climatisation selon la revendication 3 ou 4, **caractérisée en ce que** l'on prévoit un collecteur (6) entre la deuxième branche d'échange de chaleur (52) de l'échangeur de chaleur intérieur (5) et la partie basse pression (32).

6. Installation de climatisation selon l'une quelconque des revendications 1 à 5, **caractérisée en ce qu'**une dérivation formée par une cinquième soupape (75) est prévue entre le côté haute pression et le côté basse pression du compresseur (1).

7. Installation de climatisation selon l'une quelconque des revendications 1 à 6, **caractérisée en ce qu'**entre l'échangeur de chaleur intérieur (5) et le côté basse pression du compresseur (1) est prévue une paire de soupapes (76, 77) montées en parallèle.

8. Installation de climatisation selon la revendication 7, **caractérisée en ce que** les soupapes (76, 77) présentent les mêmes caractéristiques d'étranglement ou des caractéristiques d'étranglement différentes.

9. Installation de climatisation selon la revendication 7 ou 8, **caractérisée en ce que** l'une des soupapes (76, 77) est une soupape d'étranglement fixe.

10. Installation de climatisation selon l'une quelconque des revendications 1 à 9, **caractérisée en ce que** dans un type de fonctionnement orienté vers un refroidissement maximal, la première et la troisième soupape (71, 73) sont ouvertes et la deuxième soupape (72) est fermée, et **en ce qu'**au moyen de la soupape à trois voies (74), une connexion de la première branche d'échange de chaleur (51) au côté basse pression du compresseur (1) est établie.

11. Installation de climatisation selon l'une quelconque des revendications 1 à 9, **caractérisée en ce que** dans un type de fonctionnement orienté vers un refroidissement normal, la première soupape (71) est ouverte et la deuxième et la troisième soupapes (72, 73) sont fermées, et **en ce qu'**au moyen de la soupape à trois voies (74), une connexion de la première branche d'échange de chaleur (51) à la dérivation prévue entre l'échangeur de chaleur extérieur (2) et l'organe d'expansion (4) est établie.

12. Installation de climatisation selon l'une quelconque des revendications 1 à 9, **caractérisée en ce que** dans un type de fonctionnement orienté vers un séchage et un refroidissement, la première et la deuxième soupape (71, 72) sont ouvertes et la troisième soupape (72, 73) est fermée, et **en ce qu'**au moyen de la soupape à trois voies (74), une connexion de la première branche d'échange de chaleur (51) à la dérivation prévue entre l'échangeur de chaleur extérieur (2) et l'organe d'expansion (4) est établie.

13. Installation de climatisation selon l'une quelconque des revendications 1 à 9, **caractérisée en ce que** dans un type de fonctionnement orienté vers un séchage et un chauffage, la première et la troisième soupape (71, 73) sont fermées et la deuxième soupape (72) est ouverte, et **en ce qu'**au moyen de la soupape à trois voies (74), une connexion de la première branche d'échange de chaleur (51) à la dérivation prévue entre l'échangeur de chaleur extérieur (2) et l'organe d'expansion (4) est établie.

14. Installation de climatisation selon l'une quelconque des revendications 1 à 9, **caractérisée en ce que** dans un type de fonctionnement orienté vers un chauffage normal, la première et la troisième soupape (71, 73) sont fermées et la deuxième soupape (72) est ouverte, et **en ce qu'**au moyen de la soupape à trois voies (74), une connexion de la première branche d'échange de chaleur (51) au côté basse pression du compresseur (1) est établie.

15. Installation de climatisation selon l'une quelconque des revendications 1 à 9, **caractérisée en ce que** dans un type de fonctionnement orienté vers un chauffage maximal, la première soupape (71) est fermée et la deuxième et la troisième soupape (72, 73) sont ouvertes, et **en ce qu'**au moyen de la soupape à trois voies (74), une connexion de la première branche d'échange de chaleur (51) au côté basse pression du compresseur (1) est établie.
